# EUROPEAN PATENT APPLICATION

(11) **EP 4 455 339 A1**
(43) Date of publication of application: **30.10.2024**
(21) Application number: 22911815.3
(22) Date of filing: 19.12.2022
(51) Int. Cl.: C22C 38/04, C22C 38/02, C22C 38/06, C22C 38/00, C22C 38/14, C21D 8/02

(54) **HIGH-CARBON STEEL SHEET WITH EXCELLENT DURABILITY AND MANUFACTURING METHOD THEREFOR, AND INDUSTRIAL OR AUTOMOTIVE PARTS**

(30) Priority: 20.12.2021 KR 20210182581
(71) Applicant: POSCO Co., Ltd, Pohang-si, Gyeongsangbuk-do 37859 (KR)
(72) Inventor: PARK, Kyong-Su, Pohang-si, Gyeongsangbuk-do 37877 (KR); SON, Chang-Young, Pohang-si, Gyeongsangbuk-do 37877 (KR); KWON, Yung-Kug, Pohang-si, Gyeongsangbuk-do 37877 (KR)
(74) Representative: Meissner Bolte Partnerschaft mbB
(86) International application number: PCT/KR2022/020723
(87) International publication number: WO 2023/121182

(57) **Abstract**

According to an aspect of the present invention, provided are a high-carbon steel sheet with excellent durability, and industrial or automotive parts manufactured using same.

## Description

### Technical Field

The present disclosure relates to a high-carbon steel sheet and a method for manufacturing the same, or industrial or automotive parts, and more particularly, to a high-carbon steel sheet, which is particularly suitable for parts in various industries due to excellent durability thereof and a method for manufacturing the same, and industrial or automotive parts manufactured using the high-carbon steel sheet.

### Background Art

A high-carbon steel sheet is widely used throughout industry, and is particularly used as a material for automobiles and industrial parts which are subject to repeated stress or deformation. An example of automobile parts for which the high-carbon steel sheet is used includes clutch parts, seat belt spring parts, or the like, and an example of industrial parts in which the high-carbon steel sheet is used includes industrial spring parts, tool parts, or the like. The reason for which the high-carbon steel sheet is widely used in various parts is because the high-carbon steel sheet can maintain strength and ensure durability at the same time.

When manufacturing high-carbon steel, a heat treatment is generally performed after hot rolling or cold rolling to secure desired properties. Patent Documents 1 to 3 are patent documents related to a high-carbon steel sheet with excellent durability, Patent Document 1 discloses a method of manufacturing spring steel through a quenching process and a heat treatment process, Patent Document 2 discloses a method of securing a martensite structure through high-temperature heat treatment after cold rolling, and Patent Document 3 discloses a method of increasing strength of spring steel through an induction heat treatment process.

However, in relation to rapidly changing climate change, carbon neutrality has recently emerged as an important issue across all industries, and reduction of carbon emissions is required without exception in the steel industry, so there is an urgent need to research methods to secure desired physical properties while omitting a heat treatment process when manufacturing the high-carbon steel sheet.

### [Prior art Document]

(Patent Document 1) International Publication No. WO 2011-115255 A1 (published on September 22, 2011)
(Patent Document 2) European Patent No. EP 3814536 A1 (published May 5, 2021)
(Patent Document 3) European Patent No. EP 2192201 A1 (published on June 2, 2010)

### Summary of Invention

### Technical Problem

An aspect of the present disclosure is to provide a high-carbon steel sheet having excellent durability and industrial or automotive parts manufactured using the same.

Another aspect of the present disclosure is to provide a method for manufacturing a high-carbon steel sheet that can reduce manufacturing costs and carbon emissions by shortening or omitting a heat treatment process by appropriately utilizing hot rolling and cold rolling processes.

The subject of the present disclosure is not limited to the above. The subject of the present disclosure will be understood from the overall content of the present specification, and those of ordinary skill in the art to which the present disclosure pertains will have no difficulty in understanding the additional subject of the present disclosure.

### Solution to Problem

According to an aspect of the present disclosure, provided is a high-carbon steel sheet, the high-carbon steel sheet including by weight: 0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities, wherein the steel sheet includes by volume, 90% or more of martensite as a microstructure, and a residual stress of the martensite in a rolling direction may be 70 MPa or more.

The high-carbon steel sheet may further include by weight, 0.005 to 0.1% of Ti.

The high-carbon steel sheet may further include by weight, one or more of: 0.05% or less of Nb, 0.05% or less of V, 1.0 % or less of Cr, 1.0% or less of Mo, and 0.005% or less of B.

A residual stress of the martensite in a direction of 45° with respect to the rolling direction may be 30 MPa or more.

Among the martensite, a ratio of martensite elongated in the rolling direction may be 50% or more.

Among all the packets of martensite, a ratio of a packet with a long/short axis ratio of 2:1 or more may be 50% or more.

The high-carbon steel sheet may include one or more selected from ferrite and retained austenite in a total fraction of 10% or less (including 0%) by volume, and include one or more selected from pearlite and bainite in a total fraction of 5% or less (including 0%) by volume.

The steel sheet may have a yield strength of 1300 MPa or more, and a tensile strength of 1500 MPa or more.

The carbon (C) content of the steel sheet may exceed 0.20% by weight, and the residual stress of the martensite in the rolling direction may be 190 MPa or more.

The steel sheet may have a yield strength of 1590 MPa or more and a tensile strength of 1640 MPa or more.

Industrial or automotive parts manufactured using the high-carbon steel sheet may have durability test results of 100,000 or more testing cycles.

According to an aspect of the present disclosure, provided is a method for manufacturing a high-carbon steel sheet, the method including: heating a steel slab including by weight: 0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities, at a temperature within a range of 1100°C or higher; hot rolling the heated slab at a rolling end temperature of 800 to 950°C to provide a hot-rolled steel sheet; quenching and coiling the hot-rolled steel sheet to a cooling end temperature of 350°C or lower at a cooling rate of 50 to 1000°C/sec within 5 seconds after the hot rolling is performed; and omitting a heat treatment after the coiling, and cold rolling the hot-rolled steel sheet at a reduction ratio of 20 to 50%.

The slab may further include by weight, 0.005 to 0.1 % of Ti.

The slab may further include, by weight, one or more of 0.05% or less of Nb, 0.05% or less of V, 1.0% or less of Cr, 1.0% or less of Mo, and 0.005% or less of B.

A content of carbon (C) included in the slab may exceed 0.20% by weight.

The quenched hot-rolled steel sheet may include by volume, 90% or more of martensite.

In the method for manufacturing the high-carbon steel sheet, quenching may not be performed after the cold rolling.

The various and beneficial advantages and effects of the present invention are not limited to the above-described content, and may be more easily understood through description of specific embodiments of the present disclosure.

### Advantageous Effects of Invention

As set forth above, according to an aspect of the present disclosure, since a high-carbon steel sheet having excellent durability may be manufactured while shortening or omitting a heat-treatment process, not only can energy and manufacturing costs required for manufacturing the high-carbon steel sheet be effectively reduced, but also eco-friendliness may be secured by reducing an amount of carbon emitted during a high-temperature heat-treatment process.

According to an aspect of the present disclosure, a high-carbon steel sheet having excellent durability is provided, and thus a lifespan of a spring member manufactured using the same can be effectively improved.

The effect of the present disclosure is not limited to the above, and may be interpreted as including an effect that can be inferred from the description described below by those skilled in the art.

### Brief Description of the Drawings

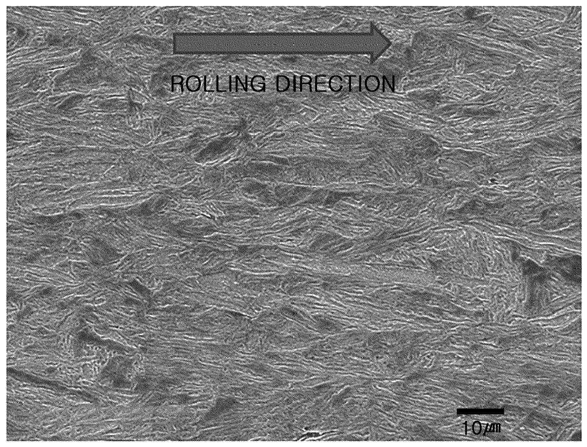

FIG. 1 is an image of a microstructure of specimen 1 using a scanning electron microscope (SEM).

### Best Mode for Invention

The present disclosure relates to a high-carbon steel sheet having excellent durability and a method for manufacturing the same, and a spring member, and preferred embodiments of the present disclosure will be described below. Embodiments of the present disclosure may be modified in various forms, and the scope of the present disclosure should not be construed as being limited to the embodiments described below. The present embodiments are provided to further explain the present disclosure to those skilled in the art.

Hereinafter, a high-carbon steel sheet according to an aspect of the present disclosure will be described in more detail.

According to an aspect of the present disclosure, provided is a high-carbon steel sheet, the high-carbon steel sheet including by weight: 0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities, wherein the high-carbon steel sheet includes by volume, 90% or more of martensite as a microstructure, and a residual stress of the martensite in a rolling direction may be 70 MPa or more.

Hereinafter, the steel composition included in the high-carbon steel sheet of the present disclosure will be described in detail. In the present disclosure, unless otherwise specified, % indicating a content of each element is based on weight.

### Carbon (C): 0.11 to 0.30%

Since carbon (C) is an element effectively contributing to improving strength of steel, in the present disclosure, carbon (C) above a certain level may be included to ensure the strength of the steel sheet. In addition, when a content of carbon (C) does not reach a certain level, a large amount of low-temperature structures such as pearlite, bainite, and the like, are formed during cooling after hot rolling, so the microstructure targeted by the present disclosure may not be secured, so in the present disclosure, a lower limit of the content of carbon (C) in the present disclosure may be limited to 0.11%. The content of carbon (C) may be 0.15% or more, and may be 0.20% or more. A preferable content of carbon (C) may exceed 0.20%. On the other hand, when an excessive amount of carbon (C) is added, the strength of the steel may be improved, but durability may decrease, so in the present disclosure, the content of carbon (C) may be limited to 0.3%. An upper limit of the preferable content of carbon (C) may be 0.295%.

### Manganese (Mn): 0.1 to 3.0%

Manganese (Mn) is an element effectively contributing to improving the strength and hardenability of steel. In addition, manganese (Mn) combines with sulfur (S), which is inevitably introduced during a manufacturing process of steel, to form MnS, so Mn is an element which can effectively prevent cracks caused by sulfur (S). In the present disclosure, 0.1% or more of manganese (Mn) may be included to achieve the above-described effect. A preferable content of manganese (Mn) may be 0.3% or more, and a more preferable content of manganese (Mn) may be 0.5% or more. On the other hand, when an excessive amount of manganese (Mn) is added, not only is there a concern about a decrease in tensile strength due to retained austenite, but it is also undesirable in terms of durability and economic efficiency. Therefore, in the present disclosure, the manganese (Mn) content may be limited to 3.0% or less. An upper limit of the preferable content of the manganese (Mn) may be 2.9%, and an upper limit of the more preferable content of the manganese (Mn) may be 2.8%.

### Silicon (Si): 0.5% or less (excluding 0%)

Silicon (Si) is an element having a strong affinity for oxygen, so when large amounts of silicon (Si) are added, silicon (Si) may cause deterioration in surface quality due to surface scale, and is also undesirable in terms of weldability. Therefore, in the present disclosure, a content of silicon (Si) may be limited to 0.5%. An upper limit of a preferable content of silicon (Si) may be 0.45%. Meanwhile, since silicon (Si) not only acts as a deoxidizer, but is also an element contributing to improving the strength of steel, in the present disclosure, the addition of silicon (Si) may not be completely excluded, and 0% may be excluded from a lower limit of the content of silicon (Si).

### Aluminum (Al): 0.1% or less (excluding 0%)

Aluminum (Al) is an element which combines with oxygen in steel and has a deoxidization action. In the present disclosure, aluminum (Al) may be added for such an effect, and 0% may be excluded from a lower limit of a content of aluminum (Al). On the other hand, when an excessive amount of aluminum (Al) is added, inclusions not only increase but also may reduce workability of the steel sheet. So, in the present disclosure, the content of aluminum (Al) may be limited to 0.1% or less. An upper limit of the content of aluminum (Al) may be 0.08%.

### Phosphorus (P): 0.05% or less (including 0%)

Since phosphorus (P) is a major element which segregates at grain boundaries to cause a decrease in toughness of steel, it is preferable to control a content of phosphorus (P) as low as possible. Therefore, it is theoretically most advantageous to suppress the content of phosphorus (P) to 0%. However, phosphorus (P) is an impurity which is inevitably introduced during a steelmaking process, and controlling the content of phosphorus (P) to 0% may cause excessive process loads. Taking this into consideration, in the present disclosure, an upper limit of the content of phosphorus (P) may be limited to 0.05%. An upper limit of a preferable content of phosphorus (P) may be 0.03%.

### Sulfur (S): 0.03% or less (including 0%)

Sulfur (S) is an element forming Mns to increase an amount of precipitates, and embrittling steel, so it is preferable to control a content of sulfur (S) as low as possible. Therefore, it is theoretically most advantageous to limit the content of sulfur (S) to 0%. However, sulfur (S) is also an impurity which is inevitably introduced during a steelmaking process, and controlling the content of sulfur (S) to 0% may cause excessive process loads. Taking this into consideration, in the present disclosure, an upper limit of the content of sulfur (S) may be limited to 0.03%. An upper limit of a preferable content of sulfur (S) may be 0.01%.

### Nitrogen (N): 0.03% or less (including 0%)

Nitrogen (N) is an element which creates a nitride during continuous casting and causes cracks in a slab, so it is preferable to control a content of nitrogen (N) as low as possible. Therefore, it is theoretically most advantageous to limit to the content of nitrogen (N) to 0%. However, nitrogen (N) is also an impurity which is inevitably introduced during a steelmaking process, and controlling the content of nitrogen (N) to 0% may cause excessive process loads. Taking this into consideration, in the present disclosure, an upper limit of the content of nitrogen (N) may be limited to 0.03% or less. An upper limit of a preferable content of nitrogen (N) may be 0.01%.

The high-carbon steel sheet according to an aspect of the present disclosure may further include 0.005 to 0.1% of titanium (Ti), in addition to the alloy components described above, and may further include one or more of 0.05% or less of niobium (Nb), 0.05% or less of vanadium (V), 1.0% or less of chromium (Cr), 1.0% or less of molybdenum (Mo), and 0.005% or less of boron (B).

### Titanium (Ti): 0.005 to 0.1%

In general, titanium (Ti) is an element known to form carbides and nitrides by combining with carbon (C) and nitrogen (N). In the present disclosure, boron (B) is added to steel to secure hardenability, but when nitrogen (N) and boron (B) included in steel are combined, an effect of adding of boron (B) desired by the present disclosure may not be achieved. When titanium (Ti) is added to steel, nitrogen (N) before combining with boron (B) combines with titanium (Ti) to form nitrides, so the effect of adding boron (B) may be improved more effectively. Therefore, in order to achieve such an effect, in the present disclosure, 0.005% or more of titanium (Ti) may be added. A lower limit of a preferable content of titanium (T) may be 0.010%, and a lower limit of a more preferable content of titanium (Ti) may be 0.015%. On the other hand, when an excessive amount of titanium (Ti) is added, castability may be reduced in a slab manufacturing operation, so in the present disclosure, an upper limit of the content of titanium (Ti) may be limited to 0.1%. An upper limit of the preferable content of titanium (Ti) may be 0.09%, and an upper limit of a more preferable content of titanium (Ti) may be 0.08%.

### Niobium (Nb): 0.05% or less, vanadium (V): 0.05% or less, and molybdenum (Mo): 1.0% or less

In general, niobium (Nb), vanadium (V), and molybdenum (Mo) are elements known to form carbides and nitrides by combining with carbon (C) and nitrogen (N) . Therefore, when niobium (Nb), vanadium (V), and molybdenum (Mo) are added, the strength increases due to carbides and nitrides. In order to achieve such an effect, in the present disclosure, one or more of niobium (Nb), vanadium (V), and molybdenum (Mo) may be added. However, excessive amounts of niobium (Nb), vanadium (V), and molybdenum (Mo) are added, a rolling load may become excessively large and manufacturing costs may excessively increase, so in the present disclosure, an upper limit of contents of niobium (Nb), vanadium (V), and molybdenum (Mo) may be limited to 0.05%, 0.05%, and 1.0%, respectively.

### Chromium (Cr): 1.0% or less

Since chromium (Cr) is an element which contributes to improving hardenability of steel, in the present disclosure chromium (Cr) may be added to achieve such an effect. A lower limit of a preferable content of chromium (Cr) may be 0.005%. On the other hand, excessive addition of chromium (Cr), an expensive element, is undesirable from an economic viewpoint, and excessive addition of chromium (Cr) may reduce weldability, so in the present disclosure, an upper limit of the content of chromium (Cr) may be limited to 1.0%. An upper limit of a preferable content of chromium (Cr) may be 0.5%.

### Boron (B): 0.005% or less

Boron (B) is an element which effectively contributes to improving hardenability of steel, so even when a small amount of boron (B) is added, boron (B) may effectively suppress transformation into low-temperature structures such as ferrite, pearlite, and the like when cooled after hot rolling. In order to achieve such an effect, in the present disclosure, 0.0005% or more of boron (B) may be added. A lower limit of a preferable content of boron (B) may be 0.001%. On the other hand, when an excessive amount of boron (B) is added, boron (B) may react with iron (Fe) and cause embrittlement at grain boundaries, so in the present disclosure, an upper limit of the content of boron (B) may be limited to 0.005%. An upper limit of the preferable content of boron (B) may be 0.0045%.

The high-carbon steel sheet according to an aspect of the present disclosure may include a remainder of Fe and other inevitable impurities in addition to the components described above. However, since in the common manufacturing process, unintended impurities may be inevitably incorporated from raw materials or the surrounding environment, the component may not be excluded. Since these impurities are known to any person skilled in the common manufacturing process, the entire contents thereof are not particularly mentioned in the present specification. In addition, further addition of effective ingredients other than the above-mentioned ingredients is not entirely excluded.

Hereinafter, a microstructure included in the high-carbon steel sheet according to an aspect of the present disclosure will be described in more detail.

The high-carbon steel sheet according to an aspect of the present disclosure includes martensite as a base structure. A fraction of martensite may be 90% or more by volume with respect to a total volume of the steel sheet, and a preferable fraction of martensite may be 95% or more by volume. The high-carbon steel sheet according to an aspect of the present disclosure includes martensite, a hard structure, as a base structure, and thus can simultaneously secure high strength and yield ratio.

Martensite included in the high-carbon steel sheet according to an aspect of the present disclosure is formed by quenching after hot rolling and is elongated by subsequent cold rolling, so among all martensite, a ratio of elongated martensite included in the steel sheet may be 50% or more. The elongated martensite may mean martensite in which a long axis of a packet is arranged within 45° from a rolling direction. In addition, in the high-carbon steel sheet according to an aspect of the present disclosure, a ratio of a packet with a long/short axis ratio of 2:1 or more among all the packets of martensite may be 50% or more.

The martensite included in the high-carbon steel sheet according to an aspect of the present disclosure is formed by cooling after hot rolling and is elongated by subsequent cold rolling, so unlike martensite typically generated, the martensite included in the high-carbon steel sheet according to an aspect of the present disclosure may have a residual stress of the martensite in a rolling direction of a level of 70 MPa or more, and have a residual stress in a direction of 45° with respect to the rolling direction of a level of 30 MPa or more. The preferable residual stress of martensite in the rolling direction may be 190 MPa or more. The residual stress of martensite may be measured by X-ray analysis, and a person skilled in the art to which the present invention pertains can measure the residual stress of martensite without any particular technical difficulties.

The high-carbon steel sheet according to one aspect of the present disclosure not only includes martensite, a hard structure, as a base structure, but the martensite included in the steel sheet is stretched by cold rolling to have a residual stress above a certain level or to have an elongated form. Therefore, the durability of steel sheets and parts manufactured using the same can be more effectively improved.

The high-carbon steel sheet according to one aspect of the present disclosure does not completely exclude structures other than martensite. However, since ferrite, pearlite, bainite, retained austenite, and the like are not desirable for securing strength and durability, fractions thereof need to be controlled within a certain range. A total fraction of ferrite and/or retained austenite is preferably 10% or less by volume, and a total fraction of pearlite and/or bainite is preferably 5% or less by volume. The present disclosure may include a case in which the total fraction of ferrite, retained austenite, pearlite, and bainite is 0%.

Meanwhile, the high-carbon steel sheet according to an aspect of the present disclosure may further include cementite and precipitates as a remaining structure thereof in addition to the above-described microstructure.

The high-carbon steel sheet according to an aspect of the present disclosure may have a yield strength (YS) of 1300 MPa or more and tensile strength (TS) of 1500 MPa or more. A preferable tensile strength (TS) may be 1640 MPa or more.

When a coil-shaped spring member is manufactured using the high-carbon steel sheet according to an aspect of the present disclosure and then a durability test is conducted by pulling the coiled spring to a certain length and then coiling the same back to its original state, it can be seen that the durability test results show excellent durability with 100,000 or more cycles.

Hereinafter, a method for manufacturing a high-carbon steel sheet according to an aspect of the present disclosure will be described in more detail.

According to an aspect of the present disclosure, a method for manufacturing a high-carbon steel sheet is provided, the method including: heating a steel slab including by weight: 0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities, at a temperature within a range of 1100°C or higher; hot rolling the heated slab at a rolling end temperature of 800 to 950°C to provide a hot-rolled steel sheet; quenching and coiling the hot-rolled steel sheet to a cooling end temperature of 350°C or lower at a cooling rate of 50 to 1000°C/sec within 5 seconds after the hot rolling is performed; and omitting a heat treatment after the coiling, and cold rolling the hot-rolled steel sheet at a reduction ratio of 20 to 50%.

### Slab heating and hot rolling

Since a slab steel composition of the present disclosure corresponds to a steel composition of the steel sheet described above, the description of the slab steel composition of the present disclosure is replaced with the description of the steel composition of the steel sheet described above. Slab manufacturing conditions are not particularly limited, and slab manufacturing conditions used in the manufacture of conventional high-carbon steel sheets may be applied.

The prepared slab is heated to a certain temperature within a range. To ensure sufficient homogenization, the slab may be heated at a temperature within a range of 1100°C or higher. However, when a slab heating temperature is excessively high, it is not only undesirable in terms of economic efficiency but may also have a negative effect on surface quality of a final product, so an upper limit of the slab heating temperature may be limited to 1350°C.

The heated slab may be hot rolled under normal hot rolling conditions, but a finish rolling temperature may be limited to the range of 800 to 950°C to control rolling load and reduce surface scale.

### Cooling and coiling

Cooling under quenching conditions may be performed on the hot-rolled steel sheet immediately after hot rolling.

Since the present disclosure intends to strictly control the microstructure of the steel sheet, cooling of the present disclosure is preferably initiated within 5 seconds immediately after an end of hot rolling. When a time from hot rolling to a start of cooling exceeds 5 seconds, ferrite, pearlite, and bainite, which are not intended by the present disclosure may be formed due to air cooling in the atmosphere. A preferrable time from immediately after the end of hot rolling to the start of cooling may be within 3 seconds.

The hot-rolled steel sheet immediately after hot rolling can be cooled to a cooling end temperature of 350°C or lower at a cooling rate of 50 to 1000°C/s. When the cooling end temperature exceeds a certain range, transformation into ferrite, pearlite, and bainite is inevitable, so an upper limit of the cooling end temperature can be limited to 350°C to secure the microstructure targeted by the present disclosure. Meanwhile, a lower limit of the cooling end temperature is not specifically defined, but a lower limit of a preferable cooling end temperature may be 150°C. When the cooling rate is below a certain level, transformation into ferrite, pearlite, and bainite occurs during cooling, so a lower limit of the cooling rate can be limited to 50°C/s to secure the microstructure targeted by the present disclosure. Meanwhile, an upper limit of the cooling rate is not particularly limited, but considering facility limitations and economic feasibility, the upper limit of the cooling rate may be limited to 1000°C/s.

In the present disclosure, cooling under rapid cooling conditions is performed on the hot-rolled steel sheet immediately after hot rolling, so that 90% or more by volume of martensite may be secured in the hot-rolled steel sheet before cold rolling. In a typical method for manufacturing a high-carbon steel sheet, a heat-treatment is performed immediately after hot rolling, the heat-treated hot-rolled steel sheet is cold rolled, and then a quenching heat treatment is performed to form a martensite structure. On the other hand, in the present disclosure, by strictly controlling the steel composition, not only can the heat treatment immediately after hot rolling be omitted, but also quenching after cold rolling can be omitted, thereby effectively lowering carbon emissions.

The cold-rolled steel sheet after cooling is performed may be coiled into a hot-rolled coil.

### Cold rolling

After uncoiling a hot-rolled coil, cold rolling may be performed with an amount of reduction of 20 to 50%. When the amount of reduction is low, sufficient elongation of martensite is not achieved, and as a result, the desired high-strength characteristics and durability cannot be secured. Therefore, in the present disclosure, the amount of reduction of cold rolling to a level of 20% or more. A preferable lower limit of the amount of reduction of cold rolling may be 25%. On the other hand, when the amount of reduction of cold rolling is excessive, not only is there a risk of damage to equipment due to a rolling load, but there may also be a problem of durability decreasing as the strength increases excessively. Therefore, in the present disclosure, an upper limit of the amount of reduction may be limited to 50%.

The high-carbon steel sheet manufactured through the above-mentioned manufacturing method includes by volume, 90% or more of martensite as a microstructure and a residual stress of the martensite in a rolling direction may be 70 MPa or more, yield strength (YS) may be 1300 MPa or more, and tensile strength (TS) may be 1500 MPa or more.

In addition, when a spring member is manufactured using the high-carbon steel sheet manufactured through the above-described manufacturing method, durability test results of the spring member may satisfy 100,000 or more cycles.

Hereinafter, a high-carbon steel sheet and a method for manufacturing the same, and parts of the present disclosure will be described in more detail through specific examples. Hereinafter, a high-carbon steel sheet and a method for manufacturing the same, and parts of the present disclosure will be described in more detail through specific examples. However, it should be noted that the following examples are for illustrative purposes only and are not intended to limit the scope of the present disclosure. The scope of the present disclosure may be determined by matters described in the claims and matters able to be reasonably inferred therefrom.

### Mode for Invention

After manufacturing a slab having the composition shown in Table 1 below, a steel sheet specimen was manufactured by applying the process conditions shown in Table 2 below. Each slab was manufactured by a conventional manufacturing method, and was heated at a temperature within a range of 1050 to 1350°C and homogenized.

**[Table 1]**

| Stee l type | Alloy components (wt%) | | | | | | | | | | | |
|---|---|---|---|---|---|---|---|---|---|---|---|---|
| | C | Mn | Si | Al | P | S | N | Nb | V | Cr | Ti | B |
| A | 0.22 | 0.97 | 0.0 | 0.0 | 0.00 | 0.00 | 0.00 | 0.00 | 0.00 | 0.0 | 0.01 | 0.001 |
| | 3 | 9 | 8 | 3 | 5 | 2 | 4 | 1 | 2 | 2 | 8 | 3 |
| B | 0.12 6 | 1.09 | 0.0 5 | 0.0 4 | 0.00 9 | 0.00 3 | 0.00 3 | - | - | 0.0 1 | 0.02 3 | 0.002 1 |
| C | 0.17 1 | 1.21 | 0.0 6 | 0.0 2 | 0.01 2 | 0.00 5 | 0.00 5 | 0.00 1 | 0.00 2 | 0.0 3 | 0.02 1 | 0.001 8 |
| D | 0.29 2 | 0.88 | 0.0 8 | 0.0 3 | 0.01 4 | 0.00 4 | 0.00 4 | 0.00 1 | 0.00 1 | 0.0 3 | 0.01 9 | 0.001 6 |
| E | 0.21 9 | 2.8 | 0.0 7 | 0.0 2 | 0.01 1 | 0.00 3 | 0.00 5 | 0.00 1 | 0.00 2 | 0.4 1 | 0.02 2 | 0.001 5 |
| F | 0.22 7 | 1.06 | 0.4 1 | 0.0 3 | 0.00 9 | 0.00 4 | 0.00 3 | 0.00 2 | 0.00 2 | 0.0 3 | 0.07 5 | 0.004 1 |
| G | 0.22 6 | 1.13 | 0.0 3 | 0.0 7 | 0.01 9 | 0.00 6 | 0.00 5 | 0.02 6 | 0.03 1 | 0.0 3 | 0.01 6 | 0.002 2 |
| H | 0.10 2 | 0.99 | 0.0 7 | 0.0 2 | 0.01 2 | 0.00 6 | 0.00 4 | 0.00 2 | 0.00 2 | 0.0 3 | 0.02 1 | 0.001 8 |
| I | 0.21 8 | 1.03 | 0.0 6 | 0.0 3 | 0.01 5 | 0.00 4 | 0.00 7 | 0.00 3 | 0.00 2 | 0.0 2 | 0.00 1 | 0.000 2 |
| J | 0.23 1 | 3.21 | 0.0 8 | 0.0 2 | 0.01 6 | 0.00 6 | 0.00 3 | 0.00 1 | 0.00 1 | 0.0 3 | 0.01 9 | 0.001 8 |

**[Table 2]**

| Division | Steel type | Rolling end temperature (°C) | Cooling start time (sec) | Cooling rate (°C/sec) | Cooling end temperature (°C) | Coiling temperature (°C) | Cold reduction ratio (%) |
|---|---|---|---|---|---|---|---|
| 1 | A | 910 | 2.4 | 100 | 294 | 250 | 30 |
| 2 | A | 892 | 2.2 | 200 | 157 | 117 | 30 |
| 3 | A | 886 | 1.6 | 300 | 241 | 216 | 30 |
| 4 | A | 930 | 1.7 | 100 | 250 | 235 | 30 |
| 5 | A | 912 | 2.9 | 100 | 236 | 222 | 30 |
| 6 | A | 921 | 2.2 | 100 | 223 | 194 | 45 |
| 7 | B | 929 | 1.8 | 100 | 259 | 231 | 30 |
| 8 | C | 911 | 1.7 | 100 | 225 | 210 | 30 |
| 9 | D | 895 | 2.2 | 100 | 256 | 217 | 30 |
| 10 | E | 882 | 1.7 | 100 | 218 | 200 | 30 |
| 11 | F | 894 | 1.1 | 100 | 179 | 148 | 30 |
| 12 | G | 856 | 2.2 | 100 | 263 | 238 | 30 |
| 13 | A | 889 | 6.4 | 100 | 199 | 181 | 30 |
| 14 | A | 773 | 2.2 | 100 | 151 | 135 | 30 |
| 15 | A | 905 | 2.4 | 100 | 391 | 359 | 30 |
| 16 | A | 916 | 2.0 | 35 | 201 | 172 | 30 |
| 17 | A | 912 | 2.0 | 100 | 151 | 132 | 15 |
| 18 | H | 921 | 1.2 | 100 | 220 | 204 | 30 |
| 19 | I | 916 | 2.4 | 100 | 188 | 168 | 30 |
| 20 | J | 926 | 1.0 | 100 | 278 | 228 | 30 |

Thereafter, a microstructure of each specimen was measured and the results thereof were provided in Table 3. After cutting each specimen in a direction parallel to a rolling direction, a specimen for observing the microstructure was collected from the cut surface at a point equal to 1/4 of plate thickness. After the samples collected in this manner were polished and corroded with a nital solution, the microstructure of each specimen was observed using an optical microscope and a scanning electron microscope (SEM). A fraction of the microstructure was measured through image analysis.

A ratio of elongated martensite was measured from an area of martensite in which a long axis of a packet is arranged within 45° from the rolling direction, as compared to an area of all the packets of martensite in the image obtained by scanning electron microscope (SEM). A long/short axis ratio of the packet of martensite was also measured from an area of a packet in which a ratio of the long axis and the short axis thereof is 2:1 or more, as compared to the area of all the packets of martensite in the image obtained by scanning electron microscope (SEM).

In Table 3, M refers to martensite, F refers to ferrite, R-γ refers to retained austenite, P refers to pearlite, and B refers to bainite.

**[Table 3]**

| Division | Microstructure Fraction (vol%) | | | | | Ratio of martensite elongated in rolling direction (%) | Ratio of packet of martensite with long/short axis ratio of 2:1 or more (%) |
|---|---|---|---|---|---|---|---|
| | M | F | R-γ | P | B | | |
| 1 | 98 | 0 | 1 | 0 | 1 | 74 | 87 |
| 2 | 100 | 0 | 0 | 0 | 0 | 73 | 84 |
| 3 | 100 | 0 | 0 | 0 | 0 | 78 | 73 |
| 4 | 98 | 0 | 1 | 0 | 1 | 85 | 72 |
| 5 | 97 | 0 | 1 | 1 | 1 | 76 | 65 |
| 6 | 99 | 0 | 1 | 0 | 0 | 83 | 75 |
| 7 | 95 | 0 | 0 | 2 | 3 | 75 | 71 |
| 8 | 95 | 1 | 0 | 2 | 2 | 80 | 76 |
| 9 | 100 | 0 | 0 | 0 | 0 | 86 | 66 |
| 10 | 95 | 0 | 5 | 0 | 0 | 71 | 84 |
| 11 | 100 | 0 | 0 | 0 | 0 | 73 | 72 |
| 12 | 100 | 0 | 0 | 0 | 0 | 77 | 79 |
| 13 | 88 | 11 | 0 | 0 | 1 | 68 | 70 |
| 14 | 88 | 6 | 0 | 4 | 2 | 71 | 68 |
| 15 | 85 | 0 | 3 | 0 | 12 | 65 | 57 |
| 16 | 85 | 1 | 1 | 4 | 9 | 76 | 69 |
| 17 | 100 | 0 | 0 | 0 | 0 | 42 | 43 |
| 18 | 68 | 24 | 0 | 4 | 4 | 53 | 54 |
| 19 | 69 | 22 | 0 | 5 | 4 | 75 | 76 |
| 20 | 85 | 0 | 15 | 0 | 0 | 74 | 73 |

Mechanical properties of each specimen were measured and the results thereof were listed in Table 4. Tensile strength and yield strength were evaluated by performing a tensile test according to JIS standards, and residual stress was measured using XSTRESS 3000 model equipment manufactured by Stresstech Group, which uses the X-ray diffraction method, and as a measurement parameter, residual stress was measured under the conditions of Time: 40s, Radiation: CrKa, and Detector distance: 50s. In addition, a coil-shaped spring member was manufactured using each specimen, and durability was evaluated through repeated tests by pulling the coiled spring to a length of 1.5 m and then coiling the same back to its original state, and the results thereof were listed in Table 4.

**[Table 4]**

| Division | Residual stress in rolling direction (MPa) | Residual stress in direction of 45° with respect to rolling direction (MPa) | Tensile strength (MPa) | Yield strength (MPa) | Durability (testing cycles) |
|---|---|---|---|---|---|
| 1 | 263 | 193 | 1674 | 1627 | 132,000 |
| 2 | 328 | 262 | 1705 | 1636 | 150,000 or more |
| 3 | 265 | 194 | 1730 | 1635 | 150,000 or more |
| 4 | 287 | 232 | 1712 | 1662 | 124,000 |
| 5 | 249 | 158 | 1647 | 1615 | 142,000 |
| 6 | 338 | 256 | 1798 | 1764 | 150,000 or more |
| 7 | 165 | 116 | 1578 | 1511 | 114,000 |
| 8 | 186 | 114 | 1629 | 1579 | 121,000 |
| 9 | 343 | 274 | 1846 | 1785 | 120,000 |
| 10 | 197 | 102 | 1765 | 1714 | 129,000 |
| 11 | 318 | 238 | 1771 | 1731 | 118,000 |
| 12 | 263 | 197 | 1781 | 1744 | 111,000 |
| 13 | 281 | 181 | 1441 | 1297 | 59.000 |
| 14 | 231 | 217 | 1476 | 1321 | 50.000 |
| 15 | 226 | 139 | 1641 | 1608 | 62.000 |
| 16 | 164 | 85 | 1491 | 1447 | 66.000 |
| 17 | 61 | 28 | 1556 | 1321 | 79.000 |
| 18 | 191 | 94 | 1375 | 1227 | 91.000 |
| 19 | 145 | 93 | 1411 | 1265 | 81.000 |
| 20 | 159 | 98 | 1716 | 1556 | 77,000 |

As shown in Tables 1 to 4, Samples 1 to 12, which satisfy all of the alloy composition and manufacturing conditions of the present disclosure, it can be confirmed that a fraction of martensite is 90% or more by volume, a ratio of martensite elongated in a rolling direction is 50% or more, and a ratio of a packet of martensite with a long/short axis ratio of 2:1 or more is 50% or more. In addition, in specimens 1 to 12, it can be confirmed that a residual stress in a rolling direction is 70 MPa or more, a residual stress in a direction of 45° with respect to the rolling direction of 30 MPa or more, a tensile strength of 1,500 MPa or more, a yield strength of 1,300 MPa or more, and durability test results of 100,000 or more testing cycles.

On the other hand, in specimens 13 to 20, which do not satisfy any one or more of the alloy composition and manufacturing conditions of the present disclosure, it can be confirmed that one or more of a fraction of martensite limited by the present disclosure, a ratio of martensite elongated in the rolling direction, and a ratio of a packet of martensite with a long/short axis ratio of 2:1 are not satisfied.

Specimen 13 is a specimen in which cooling began 5 seconds after the end of rolling, and it can be confirmed that the desired strength and durability were not secured due to the high fraction of ferrite fraction.

Specimen 14 is a case in which a rolling end temperature is low, and specimen 16 is a case in which a cooling rate is slow, in the specimens 14 and 16, it can be confirmed that fractions of pearlite and bainite were high so that the fraction of martensite fraction targeted by the present disclosure cannot be secured, and the desired strength and durability cam not be secured.

Specimen 14 is a case in which a rolling end temperature is low, and specimen 16 is a case in which a cooling rate is slow, in the specimens 14 and 16, it can be confirmed that fractions of pearlite and bainite were high so that the fraction of martensite targeted by the present disclosure cannot be secured, and the desired strength and durability cam not be secured.

Specimen 17 is a case in which a cooling reduction ratio is low, and in specimen 17, it could be confirmed that the desired durability cannot be secured due to the low ratio of a packet of martensite with a long/short axis ratio of 2:1 or more and the low residual stress of martensite.

Specimen 18 is a case in which a content of carbon (C) is low, and specimen 19 is a case in which contents of titanium (Ti) and boron (B) were low, and in specimens 18 and 19, it could be confirmed that the fraction of martensite was significantly low, so that the desired level of strength and durability may not be secured.

Specimen 20 is a case in which a manganese (Mn) content is high, and in specimen 20, it could be confirmed that transformation into martensite did not occur sufficiently, so that a large amount of retained austenite were formed, and the tensile strength and yield strength were excellent, but durability was poor.

While example embodiments have been shown and described above, it will be apparent to those skilled in the art that modifications and variations could be made without departing from the scope of the present disclosure as defined by the appended claims.

## Claims

1. A high-carbon steel sheet, comprising by weight:
0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities,
wherein the steel sheet includes, by volume, 90% or more of martensite as a microstructure, and
a residual stress of the martensite in a rolling direction is 70 MPa or more.

2. The high-carbon steel sheet of claim 1, further comprising by weight:
0.005 to 0.1% of Ti.

3. The high-carbon steel sheet of claim 2, further comprising by weight: one or more of 0.05% or less of Nb, 0.05% or less of V, 1.0% or less of Cr, 1.0% or less of Mo, and 0.005% or less of B.

4. The high-carbon steel sheet of claim 1, wherein the residual stress of the martensite in a direction of 45° with respect to the rolling direction is 30 MPa or more.

5. The high-carbon steel sheet of claim 1, wherein, among the martensite, a ratio of martensite elongated in the rolling direction is 50% or more.

6. The high-carbon steel sheet of claim 1, wherein, among all the packets of martensite, a ratio of a packet with a long/short axis ratio of 2:1 or more is 50% or more.

7. The high-carbon steel sheet of claim 1, wherein the high-carbon steel sheet comprises one or more selected from ferrite and retained austenite in a total fraction of 10% or less (including 0%) by volume, and
one or more selected from pearlite and bainite in a total fraction of 5% or less (including 0%) by volume.

8. The high-carbon steel sheet of claim 1, wherein the steel sheet has a yield strength of 1300 MPa or more and a tensile strength of 1500 MPa or more.

9. The high-carbon steel sheet of claim 1, wherein a content of carbon (C) of the steel sheet exceeds 0.20% by weight, and
the residual stress of the martensite in the rolling direction is 190 MPa or more.

10. The high-carbon steel sheet of claim 9, wherein the steel sheet has a yield strength of 1590 MPa or more and a tensile strength of 1640 MPa or more.

11. An industrial or automotive part formed using the high-carbon steel sheet of any one of claims 1 to 10, with a durability test result of 100,000 or more cycles.

12. A method for manufacturing a high-carbon steel sheet, comprising:
heating a steel slab including by weight: 0.11 to 0.30% of C, 0.1 to 3.0% of Mn, 0.5% or less (excluding 0%) of Si, 0.1% or less (excluding 0%) of Al, 0.05% or less (including 0%) of P, 0.03% or less (including 0%) of S, 0.03% or less (including 0%) of N, with a balance of Fe and inevitable impurities, at a temperature within a range of 1100°C or higher;
hot rolling the heated slab at a rolling end temperature of 800 to 950°C to provide a hot-rolled steel sheet;
quenching and coiling the hot-rolled steel sheet to a cooling end temperature of 350°C or lower at a cooling rate of 50 to 1000°C/sec within 5 seconds after the hot rolling is performed; and
omitting a heat treatment after the coiling, and cold rolling the hot-rolled steel sheet at a reduction ratio of 20 to 50%.

13. The method for manufacturing a high-carbon steel sheet of claim 12, wherein the slab further comprises by weight: 0.005 to 0.1% of Ti.

14. The method for manufacturing a high-carbon steel sheet of claim 13, wherein the slab further comprises by weight: one or more of 0.05% or less of Nb, 0.05% or less of V, 1.0% or less of Cr, 1.0% or less of Mo, and 0.005% or less of B.

15. The method for manufacturing a high-carbon steel sheet of claim 12, wherein a content of carbon (C) included in the slab exceeds 0.20% by weight.

16. The method for manufacturing a high-carbon steel sheet of claim 12, wherein the quenched hot-rolled steel sheet comprises by volume, 90% or more of martensite.

17. The method for manufacturing a high-carbon steel sheet of claim 12, wherein quenching is not performed after the cold rolling.
